# EUROPEAN PATENT SPECIFICATION

(11) **EP 3 309 343 B1**
(45) Date of publication and mention of the grant of the patent: **01.05.2019**
(21) Application number: 16193208.2
(22) Date of filing: 11.10.2016
(51) Int. Cl.: E06B 3/67

(54) **GLAZING ARRANGEMENT**
VERGLASUNGSANORDNUNG
AGENCEMENT DE VITRAGE

(43) Date of publication of application: 18.04.2018
(73) Proprietor: Lammin Ikkuna Oy, 16900 Lammi (FI)
(72) Inventor: Mökkönen, Marko, 02650 Espoo (FI)
(74) Representative: Heinänen Oy Patent Agency

(56) References cited:
- EP-A1- 2 688 853
- B. WIDENBERG ET AL: "Desing of Energy Saving Windows with High Tranmission at 900 Mhz and 1800 Mhz", DEPARTMENT OF ELECTROSCIENCE, ELECTROMAGNETIC THEORY CODEN:LUTEDX/(TEAT-7110)/1-14/(2002), 28 August 2002 (2002-08-28), pages 1-14, XP055080784,

## Description

The invention relates to a glazing arrangement.

Insulating Glass Units (IGUs) are typically used in various glazings in windows, doors and facades to save energy in all types of buildings. The IGUs comprise several glass panes which have been assembled and sealed in the factory and are separated by hermetically sealed gas spaces containing air or insulating gas. These kinds of insulating glass units can be double-, triple- or even quadruple -glazed. The surfaces of the glass panes facing the gas space can be provided with a low-e (low-emissivity) coating layers to improve the insulation properties of the glazing. Low-e coatings are relatively invisible coatings which reduce heat transfer and reflect heat back into interior. Low-e coatings are microscopically thin metal layers that are deposited on a glass surface. Depending on the application there are number of different coatings used in IGU's to achieve desired features.

At the same time as thermal transmittance (U-value) of the glazing is improved by low-e coatings the radio signals capability to propagate through the glazing is affected negatively. Mobile network signal strength outside of the building together with exterior cover attenuations are the most important factors when looking at the mobile phone network coverage in indoors. Before using the low-e coatings on windows the mobile phone network signals had relatively small attenuation values when coming to the interior through the windows, and for the mobile phone network signals have not been necessary to arrange other routes. However, the low-e coatings cause an essential attenuation to radio signals based on two main phenomenon; reflection and absorption. This is due to the fact that low-e coatings are thin but uniform electrically conductive metal layer on the surface of glass pane. The situation for the signals becomes even worse when the window comprises of several coated glass panes.

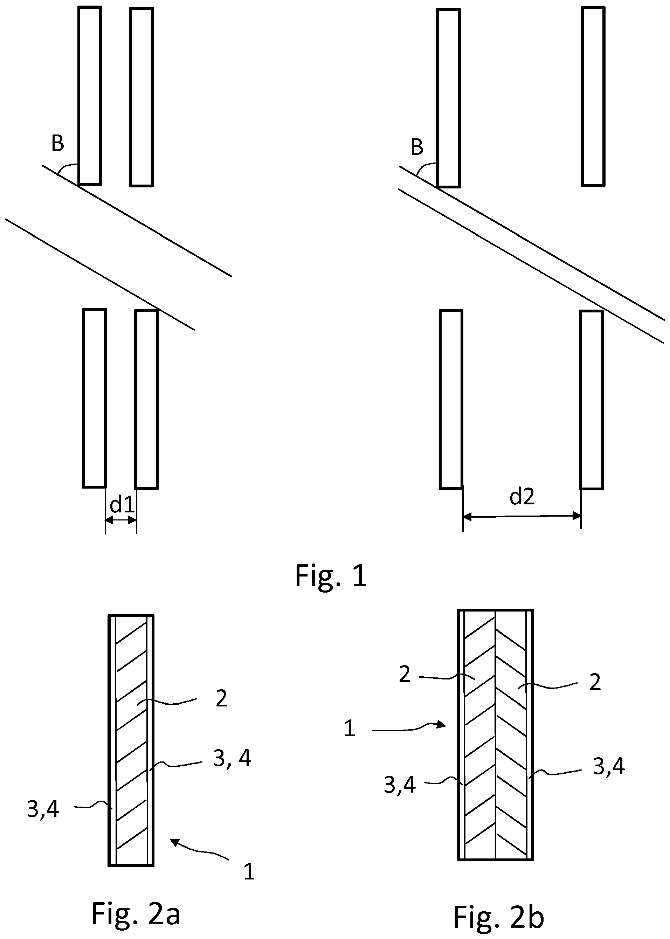

For improving the propagation of radio signals through the glass pane, the low-e coating can be provided with openings, through which radio signals are able to propagate. The size of the openings in the coating depends on the angle in which the wave front approaches the surface of the glazing. In practice, it is rare that the glazing surface is perpendicularly directed towards dominant signal transmission path in which case the amount of signal energy passing through a certain size of aperture is maximum. Because the wave front typically approaches the surface of the glazing at a horizontal or vertical angle, it is necessary to have a relatively larger opening the smaller is the approaching angle. The effectiveness of openings in glazing structure, which comprises several glass panes with low-e coating layers depend on the signal angle related to the direction of the glazing surface or its normal and the distance of the coating layers. This dependence is easiest to describe as a width of signal wave front passing through whole structure without any refraction or reflection like a one Line-Of-Sight connection. Figure 1 shows glazings with coatings that act as obstacles for wave front. The width of signal beam passing through the openings of the coatings is a function of angle B and distance of coatings (d1 and d2). From figure 1 it is easy to perceive that if a wave front has an approaching angle B, then the smaller the distance (d1, d2) between obstacles (coatings), the wider the wave front and overall signal power.

The width of the wave front and the signal power could be increased by making the area of the openings in the coatings larger, but in this case the area of the coating becomes smaller and thus the heat losses through the glazing increase.

Document EP 2 688 853 A1 discloses a glazing arrangement according to the preamble of claim 1 comprising a glass pane which comprises a dielectric glass substrate having two opposite surfaces which are provided with electrically conductive coating layers. Publication B. WIDENBERG ET AL: "Design of Energy Saving Windows with High Transmission at 900 MhZ and 1800 MhZ", DEPARTMENT OF ELECTROMAGNETIC THEORY CODEN:LUTEDX/(TEAT-7110)/1-14/(2002), 28 August 2002 (2002-08-28), pages 1-14, XP055080784 discusses the design of energy saving window panes with high transmission at certain microwave frequencies without affecting the properties at infrared and visible light. The desired behaviour is reached by making very narrow slits ordered in a periodic pattern in the metallic shielding. Such a structure is called a Frequency Selective Structure (FSS). The frequency behaviour of the FSSs depends on the shape of the slots.

The object of the present invention is to provide an improved glazing arrangement in which the above problem can be reduced.

This object is achieved by a glazing arrangement according to claim 1.

The glazing arrangement according to the invention has a number of advantages. According to the invention both technical surfaces of the glass pane are provided with conductive coating layers with openings. With this kind of the glass pane the distance between the coating layers in the glazing arrangement can be kept as small as possible. Thus, the width of the signal wave front passing through the glass pane and the glazing is wider than in glazings in which coating layers are arranged on the surfaces of different glass panes. This, in turn, decreases the signal attenuation in the glazing.

In the following the invention will be described by way of examples with reference to the accompanying drawings, in which:
Fig. 1 shows a principle of the signal wave front propagation through two types of glazings.
Fig. 2a is a cross-sectional view of a glass pane,
Fig. 2b is a cross-sectional view of another glass pane,
Fig. 3 is a front view of the glass panes shown in figs. 2a and 2b,
Fig. 4 is a cross-sectional view of a glazing arrangement,
Fig. 5 is a cross-sectional view of a second glazing arrangement, and
Fig. 6 is a cross-sectional view of a glazing arrangement according to an embodiment of the invention.

Figs. 2a and 2b show glass panes 1. The glass panes 1 can be utilized in different types of glazing arrangements. The glazing arrangement can be a window, a door provided with a glass pane, facade or other arrangement which comprises a glass pane 1.

The glass pane 1 comprises a dielectric glass substrate 2. In the embodiment of fig. 2a the glass substrate 2 has been formed of a single glass sheet. In the embodiment of fig. 2b the glass substrate 2 comprises two or more glass sheets attached to one another e.g. by laminating. In the laminating process a laminating film is arranged between the glass sheets. The laminating film is e.g. polyvinyl butyral (PVB) or EVA (Ethylene Vinyl Acetate). Thereafter, the glass sheets are laminated by melting the laminating film between the glass sheets at an elevated pressure and temperature.

The glass substrate 2 has two opposite surfaces, which are provided with electrically conductive coating layers 3. The surfaces with the conductive coating layers 3 are parallel. In fig. 2b the outermost surfaces of the glass substrate 2 are provided with electrically conductive coating layers 3. The coated surfaces of the glass substrate 2 are so-called main or technical surfaces of the glass pane 1 i.e. surfaces. Electrically conductive coatings 3 of the glass substrate 2 surfaces can be so-called low-e (low-emissivity) coatings for reducing the amount of ultraviolet and infrared light that can pass through the glass pane 1. Low-e coating layer 3 allows essentially all visible light to pass through the glass pane 1. Typically low-e coating layer 3 is a thin metal or metal-oxide film. The coating layers 3 are uncoated.

The coating 3 can be an on-line coating (hard coating) or an off-line coating (soft coating). On-line coating layer comprises metal oxides and other compounds. On-line coating is applied directly onto the surface of the glass substrate 2 during the manufacturing process when the glass substrate is extremely hot. Metal oxides and other compounds fuse onto the surface of the glass substrate 2. On-line coatings are thicker and more durable than off-line coatings. Therefore, the on-line coated surface of the glass pane can be used as the outermost surface of the glazing arrangement, such as a window. Off-line coating comprises multiple thin metal oxide layers (silver, nickel, tin) and other compounds on the surface of the glass substrate 2. Off-line coating is applied onto the surface of glass substrate as a separate step in the manufacturing process. The off-line coating is susceptible to wear. Therefore, the off-line coated glass panes are used in insulating glazings such that the off-line coated surface faces a hermetically sealed gas space between two glass panes.

The electrically conductive coating layers 3 of the glass substrate 2 comprise openings 4 for improving the propagation of radio waves through the glass pane 1. The openings 4 are dimensioned to improve the propagation of radio waves at a predetermined frequency or frequency band through the glass pane 1. The openings 4 extend through the coating layer 3. The openings 4 in the different coating layers 3 can be aligned or overlapping in the direction of the normal of the surface or surfaces of the glass substrate 2. If the openings 4 of different coating layers 3 are aligned, they are located at the same point in the horizontal and vertical directions of the glass substrate 2. If the openings 4 are overlapping, the displacement of the openings 4 in different coating layers 3 is such that the radio waves having a certain angle of incidence with respect to the normal of the substrate 2 surface propagate through openings 4 in both coating layers 3. The openings 4 are arranged in the coating layer 3 within an area having a width of 270-330 mm, typically 290-310 mm. The height of said area is 570-630 mm, typically 590-610 mm. The openings 4 are arranged within an area of at least 0.18 square meters. Typically the entire surface of the glass substrate 2 is covered by the conductive coating layer 3, except the areas of the openings 4.

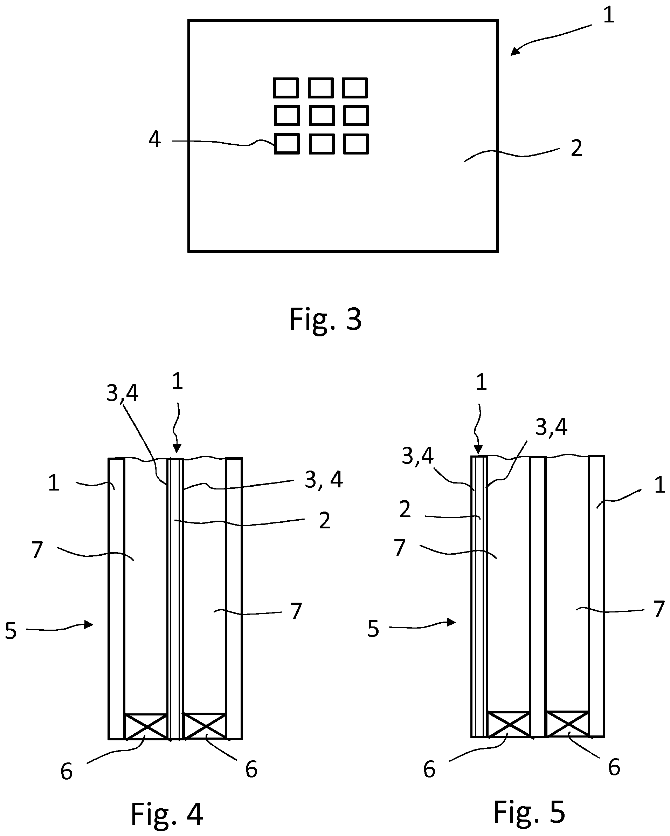

The openings 4 are formed in the conductive coating layers 3 periodically in two dimensions i.e. side by side and one on the other. The openings 3 are dimensioned such the electrically conductive coating layer 3 resonates at the predetermined frequency or frequency band when radio waves at said predetermined frequency or frequency band pass through the coating layer 3. Thus, the coating layer 3 with openings 4 forms a so-called frequency selective surface. The predetermined frequency or frequency band can comprise one or more frequencies or frequency bands used for mobile communication. The openings 4 have a form of a closed loop, typically a square loop, as in fig. 3, or a rectangular loop. The interior of the loop-shaped opening 4 comprises coating. The coating layer 3 in the interior of the loop-shaped opening 4 is electrically insulated from the coating layer 3 on the exterior of said opening 4.

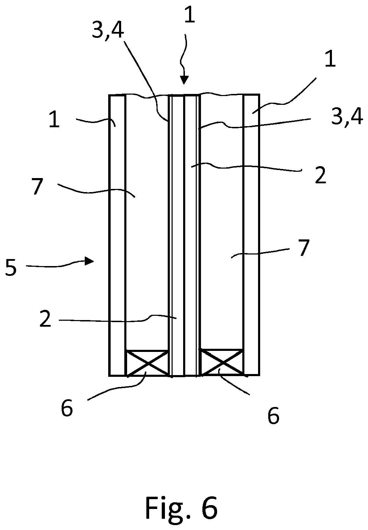

The glazing arrangement 5 comprises at least one glass pane 1 as described above. In the examples shown in figs. 4-5 and the embodiment of the invention shown in fig.6 the glazing arrangement 5 comprises at least two or three glass panes 1, one of which is the glass pane 1 with coating layers 3 and openings 4 as described above. The glass panes 1 are arranged successively at a distance from each other. A spacer 6 is arranged between two successive glass panes 1. The glazing arrangement 5 further comprises at least one hermetically sealed gas space 7 i.e. an interior provided between two successive glass panes 1. The hermetically sealed gas space 7 is bounded by the glass panes 1 and the spacer 6. The hermetically sealed gas space 7 can be filled with suitable insulating gas, such as argon or air. If the glazing arrangement 5 comprises only two glass panes 1, it has only one gas space 7 between the glass panes 1. In the embodiments shown in figs. 4-6 the glazing arrangement 5 comprises three glass panes 1 and two hermetically sealed gas spaces 7 between the glass panes 1. The glass panes 1 are arranged successively at a distance from one another by means spacers 6. The hermetically sealed gas spaces 7 are delimited by the glass panes 1 and the spacers 6.

In the example of fig. 4 the glass pane 1 which is provided with electrically conductive coating layers 3 with openings 4 is arranged between the outermost glass panes of the glazing arrangement 5. The hermetically sealed gas spaces 7 are located on both sides of said glass pane 1. The coating layers 3 of the glass pane 1 face the gas spaces 7. Coating layers 3 on both surfaces of glass substrate 2 can be off-line coatings. The surfaces of other glass panes of the glazing arrangement 5 can be uncoated.

In the example of fig. 5 the glass pane 1 which is provided with electrically conductive coating layers 3 with openings 4 is the outermost glass pane of the glazing arrangement 5. The coating layer 3 which faces the hermetically sealed gas space 7 can be an off-line coating. The coating layer 3 on the opposite side of the glass pane 1 can be an on-line coating. The other glass panes 1 of the glazing arrangement 5 can be uncoated.

In the embodiment of the invention shown in fig. 6 the glass substrate 2 of the glass pane 1, which is provided with electrically conductive coating layers 3 with openings 4, comprises two glass sheets attached to each other e.g. by laminating. This type of a glass substrate 2 is shown in fig. 2b. The coating layers 3 of the glass substrate 2 are off-line coatings. Coating layers 3 face the hermetically sealed gas spaces 7 on both sides of the glass pane 1. The other glass panes 1 of the glazing arrangement 5 can be uncoated.

The successive glass panes 1 and the hermetically sealed gas space(s) 7 therebetween form an insulating glass unit (IGU). The characteristics of these kinds of insulating glass units are defined in standard EN 1279.

## Claims

1. A glazing arrangement (5) comprising:
- at least three glass panes (1) which are arranged successively at a distance from one another by means of spacers (6), one of which glass panes (1) comprises a dielectric glass substrate (2) having two opposite surfaces which are provided with electrically conductive coating layers (3), which glass substrate (2) comprises two glass sheets attached to each other, and
- at least two hermetically sealed gas spaces (7) provided between the glass panes (1), which hermetically sealed gas spaces (7) are bounded by the glass panes (1) and spacers (6),
**characterized in that** the electrically conductive coating layers (3) comprise openings (4) for improving propagation of radio waves through the glass pane (1), and
- the glass pane (1) provided with electrically conductive coating layers (3) with openings (4) is arranged between the outermost glass panes (1) of the glazing (5).

2. The glazing arrangement (5) according to claim 1, **characterized in that** the openings (4) in different coating layers (3) are aligned or overlapping in the direction of a normal of a surface of the glass pane (1).

3. The glazing arrangement (5) according to claim 1 or 2, **characterized in that** openings (4) of the electrically conductive coating layers (3) are dimensioned such that the electrically conductive coating layers (3) resonate at a predetermined frequency band when radio waves at said predetermined frequency band pass through said openings (4).

4. The glazing arrangement (5) according to any of the preceding claims, **characterized in that** the openings (4) are arranged in the electrically conductive coating layer (3) periodically in two dimensions.

5. The glazing arrangement (5) according to any of the preceding claims, **characterized in that** the other glass panes (1) of the glazing arrangement (5) are uncoated.

6. The glazing arrangement (5) according to any of the preceding claims, **characterized in that** the electrically conductive coating layers (3) are off-line coatings.

## Patentansprüche

1. Ein Verglasungsaufbau (5), umfassend:
- wenigstens drei Glasscheiben (3), die erfolgreich in einem Abstand voneinander mittels Abstandshaltern (6) angeordnet sind, wobei eine der Glasscheiben (1) ein dielektrisches Glassubstrat (2) mit zwei gegenüberliegenden Oberflächen umfasst, die mit elektrisch leitfähigen Überzugsschichten (3) ausgestattet sind, wobei das Glassubstrat (2) zwei aneinander anliegende Glasschichten umfasst, und
- wenigstens zwei hermetisch versiegelte Gasräume (7), die zwischen den Glasscheiben (1) ausgestattet sind, wobei die hermetisch versiegelten Gasräume (7) begrenzt sind durch die Glasscheiben (7) und die Abstandshalter (6),
**dadurch gekennzeichnet, dass** die elektrisch leitfähigen Überzugsschichten Öffnungen (4) umfassen zum Verbessern einer Ausbreitung von Funkwellen durch die Glasscheiben (1), und
- die Glasscheibe (1), die mit elektrisch leitfähigen Überzugsschichten (3) mit Öffnungen (4) ausgestattet ist, zwischen den äußersten Glasscheiben (1) des Verglasungsaufbaus (5) angeordnet ist.

2. Der Verglasungsaufbau (5) nach Anspruch 1, **dadurch gekennzeichnet, dass** die Öffnungen (4) in verschiedenen Überzugsschichten (3) aufeinander ausgerichtet oder überlappend in der Richtung einer Normale einer Oberfläche der Glasscheibe (1) sind.

3. Der Verglasungsaufbau (5) nach Anspruch 1 oder 2, **dadurch gekennzeichnet, dass** Öffnungen (4) der elektrisch leitfähigen Überzugsschichten (3) derart dimensioniert sind, dass die elektrisch leitfähigen Überzugsschichten in einem vorbestimmten Frequenzband resonieren, wenn Funkwellen im vorbestimmten Frequenzband durch die Öffnungen (4) dringen.

4. Der Verglasungsaufbau (5) nach einem der vorstehenden Ansprüche, **dadurch gekennzeichnet, dass** die Öffnungen (4) in der elektrisch leitfähigen Überzugsschicht (3) periodisch in zwei Dimensionen angeordnet sind.

5. Der Verglasungsaufbau (5) nach einem der vorstehenden Ansprüche, **dadurch gekennzeichnet, dass** die anderen Glasscheiben (1) des Verglasungsaufbaus (5) unbeschichtet sind.

6. Der Verglasungsaufbau (5) nach einem der vorstehenden Ansprüche, **dadurch gekennzeichnet, dass** die elektrisch leitfähigen Überzugsschichten (3) Offline-Überzüge sind.

## Revendications

1. Agencement de vitrage (5) comprenant :
- au moins trois panneaux vitrés (1) qui sont agencés successivement à distance l'un de l'autre au moyen d'entretoises (6), où l'un des panneaux vitrés (1) comprend un substrat en verre diélectrique (2) ayant deux surfaces opposées qui sont pourvues de couches de revêtement électroconducteur (3) et le substrat en verre (2) comprend deux feuilles de verre jointes l'une à l'autre, et
- au moins deux espaces gazeux hermétiquement clos (7) situés entre les panneaux vitrés (1), où les espaces gazeux hermétiquement clos (7) sont délimités par les panneaux vitrés (1) et les entretoises (6),
**caractérisé en ce que** les couches de revêtement électroconducteur (3) comprennent des ouvertures (4) pour améliorer la propagation d'ondes radio à travers le panneau vitré (1), et
**en ce que** le panneau vitré (1) pourvu de couches de revêtement électroconducteur (3) comprenant des ouvertures (4) est agencé entre les panneaux vitrés (1) les plus à l'extérieur du vitrage (5).

2. Agencement de vitrage (5) selon la revendication 1, **caractérisé en ce que** les ouvertures (4) dans les différentes couches de revêtement (3) sont alignées ou se chevauchent dans le sens perpendiculaire d'une surface du panneau vitré (1).

3. Agencement de vitrage (5) selon la revendication 1 ou 2, **caractérisé en ce que** les ouvertures (4) des couches de revêtement électroconducteur (3) sont dimensionnées de façon que les couches de revêtement électroconducteur (3) résonnent à une bande de fréquence prédéfinie quand des ondes radio à ladite bande de fréquence prédéfinie traversent lesdites ouvertures (4).

4. Agencement de vitrage (5) selon l'une quelconque des revendications précédentes, **caractérisé en ce que** les ouvertures (4) sont agencées dans la couche de revêtement électroconducteur (3) périodiquement dans deux dimensions.

5. Agencement de vitrage (5) selon l'une quelconque des revendications précédentes, **caractérisé en ce que** les autres panneaux vitrés (1) de l'agencement de vitrage (5) sont dépourvus de revêtement.

6. Agencement de vitrage (5) selon l'une quelconque des revendications précédentes, **caractérisé en ce que** les couches de revêtement électroconducteur (3) sont des revêtements hors-ligne.
